# EUROPÄISCHE PATENTSCHRIFT

(11) **EP 2 848 573 B1**
(45) Veröffentlichungstag und Bekanntmachung des Hinweises auf die Patenterteilung: **07.10.2015**
(21) Anmeldenummer: 14002862.2
(22) Anmeldetag: 18.08.2014
(51) Int. Cl.: B66C 1/02, B25J 15/06

(54) **Heißkörperheber und Verfahren zum Heben von Heißkörpern**
Hoisting device for hot objects and method for hoisting hot objects
Dispositif de levage des objets chauds et procédé de levage des objets chauds

(30) Priorität: 13.09.2013 DE 102013015128
(43) Veröffentlichungstag der Anmeldung: 18.03.2015
(73) Patentinhaber: SMS Meer GmbH, 41069 Mönchengladbach (DE)
(72) Erfinder: Winterfeldt, Thomas, 47877 Willich (DE); Lubas, Michael, 41540 Dormagen (DE); Jungen, Hardy, 41069 Mönchengladbach (DE)
(74) Vertreter: Reuther, Martin

(56) Entgegenhaltungen:
- DE-A1- 2 516 189
- US-A- 4 294 424
- US-A- 4 561 686
- US-A1- 2004 221 981

## Beschreibung

Die Erfindung betrifft einen Heißkörperheber umfassend einen Saugheber mit einem verformbaren hitzebeständigen Dichtkörper, wobei der Dichtkörper ein verformbares Volumenelement umfasst. Darüber hinaus betrifft die Erfindung ein Verfahren zum Heben von Heißkörpern, wobei der Heißkörper mittels eines Saughebers angehoben wird, der einen verformbaren hitzebestandigen Dichtkörper mit einem verformbaren Volumenelement umfasst.

Saugheber zum Anheben von Körpern durch Saugwirkung sind aus dem Stand der Technik gut bekannt. Durch Saugheber kann auf einfache und praktische Weise ein Anheben und Transport von beliebigen Gegenständen realisiert werden, weshalb Saugheber in zahlreichen unterschiedlichen technischen Anwendungen zum Einsatz kommen. Heißkörper, die einen derartigen Saugheber umfassen, sind ebenfalls aus dem Stand der Technik bekannt. So ist beispielsweise aus der DE 25 16 189 A 1 ein Heißkörperheber für hohe Temperaturen bekannt, bei welchem eine Vakuurneinrichtung zum Erzeugen eines Unterdrucks in einem Raum vorgesehen ist, der von einem Dichtungsring umfasst ist. Bei dem Dichtungsring handelt es sich um einen Dichtungsring aus einem elastomeren Material, mit welchem infolge der Elastizität des Dichtungsrings beim Ansaugen eine sehr wirksame Dichtwirkung verbunden ist. Damit der Dichtring auch zum Anheben von Körpern mit hohen Temperaturen verwendet werden kann, ist dieser mit einer Schicht aus einem Quarzfaden-Tuch verbunden. Aus der DE 25 35 460 C3 ist ein Saugheber bekannt, welcher zum Anheben von pressheißen Spanplatten, Faserplatten und dergleichen vorgesehen ist.

Auch aus der DE 103 38 594 B4 ist es bekannt, bei einem Vakuum- Sauggreifer einen elastischen Körper aus einem elastomeren Material mit einem textilen Belag zur Erhöhung der Temperaturresistenz vorzusehen. Bei der aus DE 10 2010 060 451 A1 bekannten Saugeinrichtung kommen elastomere Saugerlippen zum Einsatz, wobei die aus dieser Druckschrift bekannte Saugeinrichtung insbesondere für die Handhabung eines Objekts in Form einer Flachglasscheibe vorgesehen ist, welche bei einer Temperatur von ca. 60 °C von der Saugeinrichtung angehoben wird.

Weitere Saugheber sind beispielsweise aus der DE 200 14 529 U1, der DE 195 48 879 C2, der DE 40 38 868 C2, der DE 1 928 727 A und der DE 1 276 310 A bekannt. Die US 2004/0221981 zeigt die Verwendung eines Saughebers zur Entnahme von gegossenen Aluminiumplatten.

Es ist Aufgabe vorliegende Erfindung ein betriebssicheres Heben von Heißkörpern auch bei verhältnismäßig hohen Temperaturen des Heißkörpers zu ermöglichen.

Die Aufgabe der Erfindung wird durch einen Heißkörperheber mit den Merkmalen des Anspruchs 1 sowie durch ein Verfahren zum Heben von Heißkörpern mit den Merkmalen des Anspruchs 9 gelöst. Weitere vorteilhafte Ausgestaltungen finden sich in den Unteransprüchen sowie in der nachfolgenden Beschreibung.

Ein Heißkörperheber umfassend einen Saugheber mit einem verformbaren hitzebeständigen Dichtkörper, wobei der Dichtkörper ein verformbaren Volumenelement umfasst, kann sich dadurch auszeichnen, dass das Volumenelement fluidisch, vorzugsweise aus Sand, ausgebildet ist. Durch Vorsehen eines fluidischen Volumenelements, welches beispielsweise aus Sand ausgebildet ist, kann ein betriebssicheres Heben von Heißkörpern auch bei sehr hohen Temperaturen des Heißkörpers ermöglicht werden, da, anders als elastisch verformbare Materialien, plastisch bzw, fluidisch verformbare Materialien in einem wesentlich höheren Temperaturfenster ihre entsprechenden Eigenschaften beibehalten. Insbesondere ist bei geeigneter Materialwahl ein betriebssicheres Heben von Heißkörpern mit Temperaturen bzw. Körpertemperaturen oberhalb von 500 °C, insbesondere auch oberhalb von 600 °C möglich. Ein betriebssicheres Heben von Heißkörpern bei diesen Temperaturen bzw. Körpertemperaturen ist mit den bekannten Saughebern bzw. Heißkörperhehern nicht möglich, da bei diesen auf Dichtkörper aus einem elastomeren Material wie z.B. Gummi, zurückgegriffen wird. So ist z.B. aus der DE 25 16 189 A1 ein Dichtkörper in Form eines Ringes aus einem elastomeren Material vorgesehen, wobei zur Erhölung der Temperaturbeständigkeit Schichten aus Quarzfaden-Tuch an dem Ring vorgesehen sind. Allerdings können elastomere Materialien insbesondere Temperaturen von oberhalb 500 °C nicht lange widerstehen. Auch das Vorsehen eines Quarzfaden-Tuchs bewirkt hier nur eine geringfügige Verbesserung, da dieses eine Wärmeübertragung von dem Heißkörper auf den elastomeren Ring nur unwesentlich verringert.

Neben dem bereits vorstehend erwähnten Sand kann als Material, welches für das Volumenelement genutzt wird, beispielsweise eine temperaturstabile Flüssigkeit, solange ein ausreichend dichter und temperaturbeständiger Mantel gefunden werden kann, oder anderes rieselfähiges bzw. fluidisches Schüttgut, wie beispielsweise Glas- oder Metall bzw. Stahlkugeln oder mineralische bzw, keramische Pulver oder Schüttungen, genutzt werden. Alternativ bzw. kumulativ hierzu kann das Volumenelement aus Metallpulver ausgebildet sein bzw. Metallpulver umfassen.

Bei dem ausreichend dichten und temperaturbeständigen Mantel kann es sich insbesondere um einen textilartigen Mantel handeln, wobei die Maschengröße des Mantels auf die Korngrößen bzw, Kugelgrößen des für das jeweilige Volumenelement verwendeten Materials zur Erzielung einer hinreichenden Dichtungswirkung des Mantels abgestimmt sein kann bzw. umgekehrt - also z.B. eine Abstimmung der Maschengröße auf die Korngrößen des Pulvers oder der Schüttungen bzw. eine Abstimmung auf die Kugelgrößen der Metallkugeln. Wenn als Material für das Volumenelement eine temperaturstabile Flüssigkeit genutzt wird, kann das Mantel-Material derart an die Flüssigkeit angepasst sein bzw. werden, dass ein Austreten der Flüssigkeit durch den Mantel wirksam verhindert wird. Insbesondere kann auch durch Anpassen der Viskosität der Flüssigkeit an die Maschengröße oder Porosität des Mantels ein Flüssigkeitsaustritt wirksam unterbunden werden.

Die Korngrößen bzw. Kugelgrößen des jeweiligen Materials können insbesondere bei 4 mm und tiefer, vorzugsweise innerhalb eines Bereichs von 0,1 mm bis 3 mm, besonders bevorzugt innerhalb eines Bereichs von 0,1 mm bis 0,8, mm liegen. Hierdurch und insbesondere durch Korn- bzw. Kugelgrößen unterhalb von 4 mm bzw. 3 mm oder 2 mm erhält das Volumenelement ausreichend fluidische Eigenschaften, um das Dichtelement unterschiedlichsten Oberflächen anpassen zu können. Auch können durch Korn- bzw. Kugelgrößen über 0,05 mm ausreichend weitmaschige und nicht zu kostspielige Mantelmaterialien zur Anwendung kommen.

Im Unterschied zu einem elastomeren Dichtkörper kann ein Dichtkörper mit einem verformbaren fluidischen Volumenelement, welches vorzugsweise aus Sand ausgebildet ist, sehr hohen Temperaturen von oberhalb 500 °C - insbesondere von oberhalb 600 °C - ausgesetzt werden. Insbesondere kann ein derartiges Volumenelement diesen Temperaturen sehr lange ausgesetzt werden, ohne dass es hierdurch zu einer Beeinträchtigung der Dichtwirkung des Dichtkörpers bzw. Volumenelements kommt.

Unter einem fluidisch ausgebildeten Volumenelement ist hierbei ein Volumenelement zu verstehen, welches eine Substanz bzw. ein Material umfasst, die bzw. das einer Scherung, insbesondere einer Scherung unter einer Zeitskala, die den Abläufen bei den vorliegenden Hebeprozessen entspricht und somit eine Zeitskale von einem Tag nicht überschreitet, keinen Widerstand bzw. keinen wesentlichen Widerstand entgegensetzt. Bei dieser Substanz bzw. dem Material kann es sich insbesondere vorzugsweise um Sand handeln. Im Unterschied zu bekannten Heißkörperhebern, wie sie z. B. aus der DE 25 16 189 A1 bekannt sind, erfolgt bei dem Dichtkörper mit dem verformbaren fluidischen Volumenelement die Dichtwirkung nicht aufgrund einer Elastizität sondern aufgrund der fluidischen Beweglichkeit des Volumenelements.

Insbesondere ein aus Sand ausgebildetes fluidisches Volumenelement weist eine hohe Hitzebeständigkeit infolge der hohen Hitzebeständigkeit des Sandes auf, wobei diese hohe Hitzebeständigkeit ein betriebssicheres Heben der Heißkörper auch bei sehr hohen Temperaturen ermöglicht.

Bei dem Sand kann es sich vorzugsweise um Quarzsand bzw. Gießereisand handeln, der sich durch eine sehr hohe Temperaturbeständigkeit bzw. durch eine sehr hohe Temperaturfestigkeit auszeichnet. In Versuchen hat sich herausgestellt, dass auch Vogelsand diesbezüglich hervorragend geeignet ist, zumal dieser sehr feinkörnig und mithin gut fluidisch an geänderte Oberflächenverhältnisse anpassbar ist.

Die Korngröße des Sands bzw. der anderen vorstehend genannten Materialien, wie Schüttungen oder Pulver, kann vorzugsweise innerhalb eines Bereichs von 0,1 mm bis 3 mm, besonders bevorzugt innerhalb eines Bereichs von 0,1 mm bis 0,8 mm liegen. Für einen textilartigen Mantel können die Korngrößen zur Erzielung einer hinreichenden Dichtungswirkung des Mantels - bzw, zur Vermeidung eines Herausrieselns bzw. Heraustretens von Sand oder anderer Materialien durch den Mantel hindurch - auf die Maschengrößen des Mantels abgestimmt sein.

Es versteht sich, dass entsprechende Schüttungen oder Pulver aus den weiter oben beschriebenen Materialien in der Regel eine Korngrößenverteilung aufweisen, so dass sämtliche der vorliegend benannten Abmessungen der das fluidische Volumenelement bildenden Materialien als mittlere Größen zu verstehen sind. Hierbei ist die eigentliche Verteilung an sich im Wesentlichen unkritisch, solange die fluidischen Eigenschaften erhalten bleiben. Insoweit sind größere Partikel innerhalb des fluidischen Volumenelements dann unkritisch. Ggf. werden zu große Partikel, welche die Dichtungseigenschaften des Dichtkörpers beeinträchtigten könnten entfernt, wobei hier in der Regel der Mantel etwaige zu große Partikel kaschieren wird. Auch zu kleine Partikel sind in der Regel unkritisch, da diese durch etwaige Maschen oder Öffnungen des hitzebeständigen Mantels einfach austreten können, solange ausreichend Material betriebssicher zur Ausbildung des Volumenelements innerhalb des Mantels verbleibt.

Eine sehr hohe Hitzebeständigkeit kann dadurch vorteilhaft realisiert werden, dass der Dichtkörper einen verformbaren hitzebeständigen Mantel aufweist. Insbesondere kann das verformbare Volumenelement von dem hitzebeständigen Mantel wenigstens teilweise oder zur Gänze umgeben sein und auf diese Weise ein fluidisches Auseinanderfließen des verformbaren Volumenelements verhindern. Hierdurch können insbesondere auch sehr schnell verformende fluidische Materialien zur Anwendung kommen, die dann durch den Mantel zusammengehalten werden können. Andererseits ist es alternativ denkbar, auf einen derartigen Mantel zu verzichten, wenn das Volumenelement selbst ausreichend eigenstabil ist.

Besonders bevorzugt kann der Mantel textilartig ausgebildet sein, wobei der Mantel insbesondere in Form eines Gewebes oder Gewirkes ausgebildet sein kann. Ein textilartiger Mantel kann vorteilhaft auf einfache und praktische Weise bereitgestellt werden. Auch kann er geeignet verformbar ausgebildet werden, so dass der Mantel einer fluidischen Verformung des verformbaren Volumenelements ohne weiteres folgen kann.

Insbesondere kann es sich bei dem textilartigen Mantel um einen Mantel aus einem Material handeln, welches für Gießerelanzüge verwendet wird und mithin eine hohe Hitzebeständigkeit aufweist oder welches auch als Dichtungsmaterial zum Abdichten einer Anordnung von Steinen bzw. Steinplatten und/oder zum Abdichten von beweglichen Übergängen zwischen Steinen bzw. Steinplatten besonders in der Gießereitechnik verwendet wird und sich neben einer hohen Hitzebeständigkeit auch durch eine sehr hohe Robustheit bzw. Dauerfestigkeit auszeichnet. Derartiges Material kann beispielsweise Mineralfasern, keramische Fasern oder Glasfasern umfassen, die entsprechend hohe Temperaturen aushalten und zu textilartigem Material verarbeitet werden können.

Hierbei dient zunächst vordergründig der Mantel als Dichtmaterial, während das Volumenelement zur Kraftübertragung der Dichtkräfte, entweder aufgrund seines Eigengewichts oder aber durch etwaige Anlagen oder Pressflächen bedingt, dient. Andererseits kann bei der Verwendung eines textilartigen Mantels das Volumenelement, indem es beispielsweise in Maschen des textilartigen Materials eindringt auch dichtend wirken, wenn Luft durch die Maschen des Mantels hindurchzudringen sucht.

Bei einer praktischen Ausführungsform kann der Saugheber einen, vorzugsweise metallischen, Stützkörper umfassen. Insbesondere kann dieser Stützkörper dazu ausgebildet sein, dass sich das fluidisch verformbare Volumenelement an diesem abstützen kann. Auf diese Weise kann das fluidisch verformbare Volumenelement einfach und betriebssicher in seiner Position gehalten werden. Ggf. kann das fluidisch verformbare Volumenelement auch an dem Stützkörper, vorzugsweise über seinen Mantel, befestigt sein, wobei vorzugsweise diese Befestigung beweglich ausgebildet ist, so dass das fluidisch verformbare Volumenelement nach wie vor seine dichtende Funktion als Bestandteil des Dichtkörpers erfüllen kann.

Durch Vorsehen des Stützkörpers kann bei geeigneter Ausgestaltung eine sehr stabile Saughaltung des Heißkörpers an dem Heißkörperheber dadurch realisiert werden, dass sich auch der Heißkörper an dem Stützkörper abstützen kann und insbesondere die Saugkräfte den Heißkörper in eine definierte Position in Bezug auf das verformbare Volumenelement positionieren, welches aufgrund seiner fluidischen Eigenschaft diesen Saugkräften nur sehr bedingt begegnen kann. Besonders vorteilhaft kann der Stützkörper eine Heißkörperanlage aufweisen, an welche der jeweilige Heißkörper zum Anheben angelegt werden kann. Diese Heißkörperanlage kann insbesondere aus einem Material bestehen, welches eine sehr hohe Temperaturbeständigkeit aufweist, beispielsweise aus einem metallischen Material. Insbesondere kann die Heißkörperanlage in konkreter Ausführung eine umlaufende Fläche umfassen, die z.B. ringförmig ausgebildet sein kann.

Bevorzugt kann der Stützkörper saugseitig des Dichtkörpers angeordnet sein. Durch diese Anordnung kann durch den Stützkörper betriebssicher und einfach eine Anlagefläche für den Dichtkörper beim Ansaugen durch den Saugheber bereitgestellt werden, einhergehend mit der Schaffung einer sehr wirksamen und betriebssicheren Dichtung, was wiederum vorteilhaft mit meiner wirksamen und betriebssicheren Saughaltung einhergeht.

Besonders bevorzugt kann der Stützkörper dichtkörperseitig eine Dichtkörperanlage aufweisen. Durch Versehen des Stützkörpers mit der Dichtkörperanlage kann eine sehr gute Dichtwirkung bereitgestellt werden. Die Dichtkörperanlage kann hierbei insbesondere in Form einer an dem Stützkörper vorgesehenen ebenen bzw. glatten Außenfläche ausgebildet sein. Durch eine ebene bzw. glatte Außenfläche kann für den Dichtkörper eine sehr hohe Dichlungswirkung bereitgestellt werden.

Unter Umständen kann auf einen separaten Sturzkörper verzichtet werden, wenn der Dichtkörper, also das Volumenelement und ggf. der Mantel, ausreichend eigenstabil ist. In der Regel wird jedoch der Stiltzkörper den eigentlichen Ansaugkräften begegnen, während der Dichtkörper lediglich den durch die Festkörpereigenschaft des Stützkörpers und des Heißkörpers bedingten Undichtigkeiten zwischen diesen beiden Baugruppen abdichtet. Die hierzu notwendigen Dichtkräfte können beispielsweise durch das Eigengewicht des Dichtkörpers aufgebracht werden. Ebenso ist es denkbar, den Dichtkörper über weitere Anlagen unter Spannung zu setzen bzw. mit Kräften zu beaufschlagen, die diesen dichtend gegen den Heißkörper drücken. Diese Anlagen können ggf. derart ausgebildet sein, dass sie den Dichtkörper soweit stabilisieren, dass der Stützkörper auch nicht teilweise unmittelbar mit dem Heißkörper in Kontakt kommt und mithin der Dichtkörper den Ansaugkräften unmittelbar begegnen kann. Um letzteres zu realisieren, kann es beispielsweise sinnvoll sein, eine weitere Anlage, die beispielsweise parallel zu dem Heißkörper und an der von dem Heißkörper abgewandten Seite des Dichtkörpers angeordnet ist, oder eine Anlage mit U-förmigem Querschnitt vorzusehen.

Besonders praktisch kann der Dichtkörper lösbar an dem Stützkörper befestigt sein bzw. mit diesem verbunden sein, um z. B. ein Auswechseln desselben auf einfache und praktische Weise realisieren zu können. Die lösbare Befestigung kann beispielsweise eine Schraubverbindung umfassen bzw. in Form einer Schraubverbindung ausgebildet sein. Auch kann beispielsweise eine Klemmverbindung, die ihrerseits beispielsweise wieder verschraubt ist, vorgesehen sein. Selbstverständlich sind auch beliebig anders ausgebildete Befestigungs- bzw. Verbindungsarten denkbar, wobei der Dichtkörper insbesondere auch formschlüssig lösbar an dem Stützkörper befestigt sein kann bzw. lösbar mit dem Stützkörper verbunden sein kann.

Ein Verfahren zum Heben von Heißkörpern, wobei der Heißkörper mittels eines Saughebers angehoben wird, der einen verformbaren hitzebeständigen Dichtkörper mit einem verformbaren Volumenelement umfasst, kann sich dadurch auszeichnen, dass ein fluidisches, vorzugsweise aus Sand, ausgebildetes Volumenelement verwendet wird. Durch dieses Verfahren ist ein betriebssicheres Heben von Heißkörpern auch bei hohen Temperaturen oberhalb von 500 °C und insbesondere auch oberhalb von 600 °C möglich, wie bereits oben dargelegt.

Bevorzugt setzt der Saugheber an einem zentralen Bereich des Heißkörpers an. Durch Ansetzen des Saughebers an einem zentralen Bereich des Heißkörpers kann ein sehr betriebssicheres Anheben dadurch realisiert werden, dass Kippmomente in Folge des Gewichts des jeweils zu hebenden Heißkörpers vermieden bzw. minimiert werden können.

Vorzugsweise kann der Heißkörper mit einer Körpertemperatur von über 500 °C, insbesondere von über 600 °C, angehoben werden. Ein betriebssicheres Anheben eines Heißkörpers mit einer derart hohen Körpertemperatur ist durch Verwenden des fluidischen, vorzugsweise aus Sand, ausgebildeten Volumenelements problemlos möglich, wie auch bereits oben dargelegt.

Insbesondere können durch die vorstehend beschriebenen Saugheber Anoden, insbesondere auch wenn sie gerade frisch gegossen und noch sehr heiß sind, aus einer Kokille entnommen werden. Dieses gilt betriebssicher insbesondere auch dann, wenn Anodenohren nicht vollständig ausgebildet wurden, als ein Fehlguss vorliegt. Dementsprechend ist die Verwendung eines Saughebers zur Entnahme von Anoden aus Kokillen, vorzugsweise wenn die Anoden noch heiß sind, vorteilhaft, um die Anoden betriebssicher aus den Kokillen entnehmen zu können. Hierzu braucht lediglich abgewertet werden, dass die Anoden ausreichend formstabil sind.

Es versteht sich, dass die Merkmale der vorstehend bzw. in den Ansprüchen beschriebenen Lösungen gegebenenfalls auch kombiniert werden können, um die Vorteile entsprechend kumuliert umsetzen zu können.

Weitere Vorteile, Ziele und Eigenschaften vorliegender Erfindung werden anhand nachfolgender Beschreibung von Ausführungsbeispielen erläutert, die insbesondere auch in anliegender Zeichnung dargestellt sind. In der Zeichnung zeigen:
- Figur 1 A: eine schematische Vorderansicht eines Heißkörperhebers;
- Figur 1B: eine schematische Seitenansicht des Heißkörperhebers nach Figur 1A;
- Figur 2: eine schematische Schnittdarstellung eines Details eines Heißkörperhebers zusammen mit einem Heißkörper; und
- Figur 3A bis 3C: jeweils eine schematische Draufsicht und zwei schematische Seitenansichten eines Heißkörpers

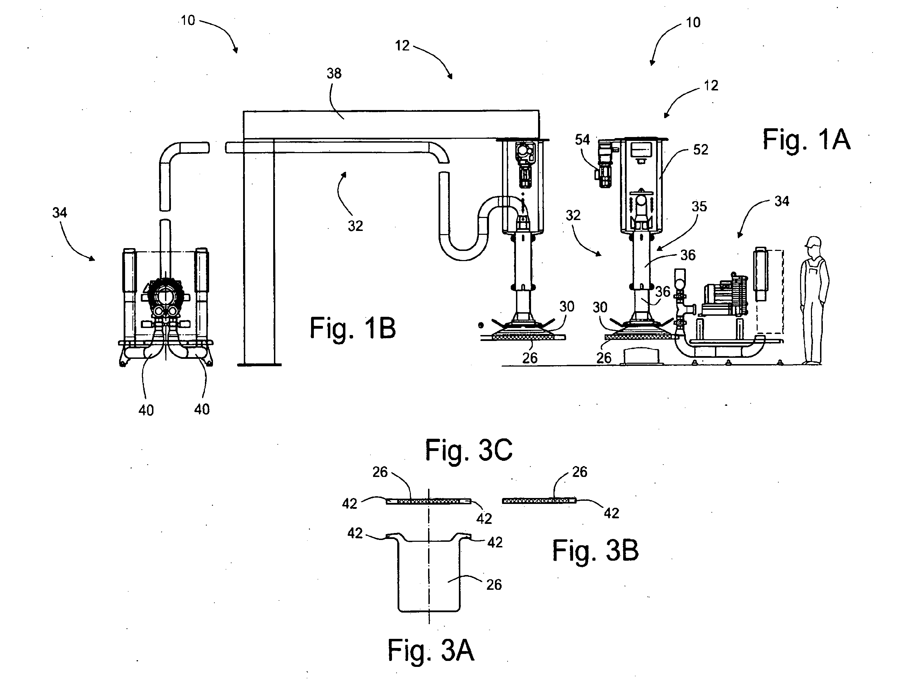

Der in den Figuren 1A und 1B schematisch dargestellte Heißkörperheber 10 umfasst einen Saugheber 12. Der Saugheber 12 weist eine Saugglocke 30 auf, die über eine Ansaugleitung 32 luftleitend mit einer Pumpeinrichtung 34 verbunden ist, welche zum Ausbilden eines Unterdrucks zum Saughalten eines Heißkörpers 26 innerhalb der Saugglocke 30 vorgesehen ist.

Die Pumpeinrichtung 34 (vgl. Figur 1B) weist zwei Abluftrohre 40 auf, über welche die zum Saughalten des Heißkörpers 26 angesaugte Luft in die Umgebung abgeführt werden kann. Die Abluftrohre 40 sind ferner mit nicht näher veranschaulichten Schalldämpfern zur Reduktion der Geräuschbelästigungen verschen.

Die Ansaugleitung 32 weist einen an die Saugglocke 30 angeschlossenen Endabschnitt 35 auf, welcher zwei teleskopartige ineinander verschiebbare Ansaugrohre 36 umfasst. Dadurch, dass die Ansaugrohre 36 teleskopartig ineinander verschiebbar sind, kann eine Anpassung bzw. ein Heranfahren an eine vorliegende Position des jeweils anzuhebenden Heißkörpers 26 bereitgestellt werden. Zum Verlängern bzw. Verkürzen des Endabschnitts 35 durch entsprechendes teleskopartiges Verschieben der beiden Ansaugrohre 36 relativ zueinander ist eine an die Ansaugrohre 36 gekoppelte Aktorik 52 vorgesehen, die mit einem Antriebsmotor 54 versehen ist.

Die Figuren 1A und 1B veranschaulichen die Situation, in welcher ein Heißkörper 26 durch Aktivieren der Pumpeinrichtung 34 an die Saugglocke 30 angesaugt ist.

Der Heißkörperheber 10 umfasst einen sehr schematisch dargestellten Manipulator 38 (vgl. Fig. 1B), über welchen die Saugglocke 30 zusammen mit dem an die Saugglocke 30 angesaugten Heißkörper 26 bewegt werden kann, um den Heißkörper 26 von einer Ausgangsposition in eine bestimmungsgemäße Endposition zu überführen.

Bei dem angesaugten Heißkörper 26 handelt es sich bei diesem Ausführungsbeispiel um eine plattenförmige metallische Anode aus Kupfer, welche mit Anodenohren 42 versehen ist. Derartige Anoden kommen als Anoden für die Gewinnung von reinem Kupfer durch Elektrolyse zum Einsatz, wobei das reine Kupfer dann an der Kathode abgeschieden wird. Die Anoden werden üblicherweise in Gussformen bzw. Kokillen (nicht dargestellt) gegossen und sind nach Erreichen einer gewissen Formbeständigkeit aus den Gussformen bzw. Kokillen zu entnehmen. Hierfür ist es bekannt, die Anoden an einem oder beiden Anodenohren 42 z.B. über ein Hakensystem mittels eines Krans zu entnehmen. Diese Vorgehensweise macht es erforderlich, dass die Anodenohren 42 bereits vollständig ausgebildet sind, um die Anode über wenigstens ein Anodenohr 42 an dem jeweiligen Hakensystem zu halten, wobei das Anodenohr 42 hierbei als hakenförmiges Haltelement dient.

Die oben beschriebene Entnahme der Anode über wenigstens eines der beiden Anodenohren 42 mittels eines Hakensystems kann zur Beschädigungen an der Anode oder auch an der Kokille bzw. Gussform führen, da diese Art der Entnahme eine sehr ungleichmäßige Krafteinwirkung mit sich bringt. Meist wird zum Herausziehen der Anode aus der Kokille bzw. Gussform auch mit einem Brecheisen nachgeholfen, einhergehend mit einem hohen Schädigungspotenzial an Gusstormen bzw. Kokillen und/oder Anoden. Letzteres gilt insbesondere bei Gussfehlern, wenn beispielsweise ein Anodenohr 42 nicht ausreichend ausgebildet ist und dort ein Hakensystem nicht befestigt werden kann. Durch Vorsehen des Heißkörperhebers 10 mit dem Saugheber 12 hingegen kann eine wesentlich betriebssichere Entnahme des Heißkörpers 26 aus der jeweiligen Kokille bzw. Gussform insbesondere dadurch realisiert werden, dass die Saugglocke 30 flächig an der flachen Seite des Heißkörpers 26 ansetzt - eine vollständige Ausbildung der Anodenohren 42 ist nicht erforderlich.

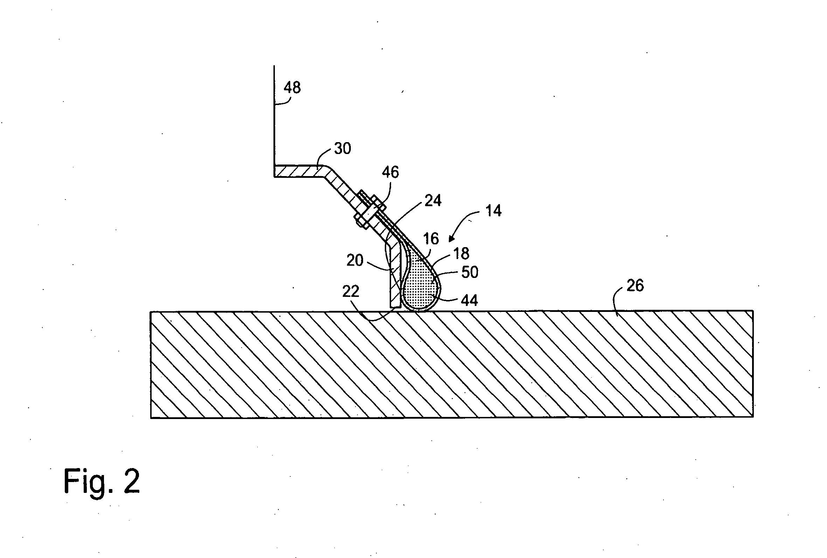

In der in Figur 2 dargestellten schematischen Schnittdarstellung eines Details des Heißkörperhebers 10 ist schematisch ein Ausschnitt der Saugglocke 30 des Saughebers des Heißkörperhebers 10 zusammen mit einer Hälfte des Anschlusstutzens 4R des Saughebers 12 und dem umlaufenden Dichtkörper 14 dargestellt. Bei dem Dichtkörper 14 handelt es sich um einen verformbaren und hitzebeständigen Dichtkörper 14. Ferner ist in der Figur 2 schematisch ein plattenförmiger Heißkörper 26 dargestellt.

Der Dichtkörper 14 umfasst ein verformbares Volumenelement 16, wobei das Volumenelement 16 bei diesem Ausführungsbeispiel aus Sand 44 ausgebildet ist und mithin also ein fluidisch ausgebildetes Volumenelement 16 ist.

Bei dem Sand 44 handelt en sich um einen rehr hitzebeständigen Quarzsand bzw. Gießereisand.

Der Sand 44 ist in einem umlaufenden Volumen 50 aufgenommen, welches von einem verformbaren hitzebeständigen Mantel 18 umgrenzt ist. Der Mantel 18 besteht hierbei aus einem textilartigen Material, welches einem für die Herstellung von Gießereianzügen verwendeten Material entspricht. Ein zylinderförmiger Endabschnitt der Saugglocke 30 ist in Form eines metallischen Stützkörpers 20 ausgebildet.

Der Stützkörper 20 weist eine Heißkörperanlage 22 auf, an welche der Heißkörper 26 zwecks Saughaltung anlegbar ist. Die Heißkörperanlage 22 ist hierbei in Form einer umlaufenden ringförmigen Anlagefläche ausgebildet, welche zu Erzielung einer guten Saughaltung in Form einer ebenen und glatten Anlagefläche ausgebildet ist.

Der Stützkörper 20 ist saugseitig des Dichtkörpers 14 angeordnet. Ferner weist der Stützkörper 20 dichtkörperseitig eine Dichtkörperanlage 24 auf, die in Form einer umlaufenden glatten Außenfläche ausgebildet ist, einhergehend mit der Erzielung einer sehr guten Dichtungswirkung, indem sich der Dichtkörper 14 an die Dichtkörperanlage 25 und an den Heißkörper anschmiegen und so einen unvermeidlichen, durch die Festkörpernatur des Stützkörpers 20 und des Heißkörpers bedingten Spalt zwischen Heißkörperanlage 22 und Heißkörper 26 abdichten kann,

Der Dichtkörper 14 ist über eine Schraubverbindung 46 lösbar an dem Stlitzkörper 20 befestigt bzw. lösbar mit dem Stützkörper 20 verbunden. Durch Vorsehen der Schraubverbindung 46 kann der Dichtkörper 14 auf einfache und praktische Weise - sofern erforderlich - ausgewechselt bzw. ausgetauscht werden.

Mittels des Heißkörperhebers 10 mit einem Saugheber 12, welcher die in Figur 2 näher veranschaulichte Saugglocke 30 samt Anschlussstutzen 48 und verformbaren hitzebeständigen Dichtkörper 14 mit dem verformbaren Volumenelement 16 umfasst, wobei das fluidische aus Sand 44 ausgebildete Volumenelement 16 verwendet wird umfasst, kann gemäß einem Verfahren zum Heben von Heißkörpern 26 der Heißkörper 26 angehoben werden.

Durch Vorsehen des aus Sand 44 ausgebildeten Volumenelements 16, insbesondere auch in Verbindung mit dem verformbaren hitzebeständigen Mantel 18, kann ein Heißkörper 26 mit einer Körpertemperatur von über 500 °C, insbesondere von über 600 °C, angehoben werden, und zwar auf eine sehr betriebssichere Art und Weise. Dieser Vorteil ist eine Folge des Umstands, dass durch die Verwendung des aus Sand 44 ausgebildeten Volumenelements 16 und des entsprechend temperaturstabilen Mantels eine sehr hitzebeständige Dichtung bzw. ein sehr hitzebeständiger Dichtkörper 14 bereitgestellt wird, der insbesondere auch nicht nur hohen Temperaturen sondern auch sehr langen Einwirkzeiten dieser hohen Temperaturen problemlos standhalten kann.

**Bezugszeichenliste:**

| | | | |
|---|---|---|---|
| 10 | Heißkörperheber | 35 | Endabschnitt |
| 12 | Saugheber | 36 | Ansaugrohr |
| 14 | Dichtkörper | 38 | Manipulator |
| 16 | Volumenelement | 40 | Abluftrohr |
| 18 | Mantel | 42 | Anodenohr |
| 20 | Stützkörper | 44 | Sand |
| 22 | Heißkörperanlage | 46 | Schraubverbindung |
| 24 | Dichtkörperanlage | 48 | Anschlusstutzen |
| 26 | Heißkörper | 50 | Volumen |
| 30 | Saugglocke | 52 | Aktorik |
| 32 | Ansaugleitung | 54 | Antriebsmotor |
| 34 | Pumpeinrichtung | | |

## Patentansprüche

1. Heißkorperheber (10) umfassend einen Saugheber (12) mit einem verformbaren hitzeheständigen Dichtkörper (14), wobei der Dichtkörper (14) ein verformbares Volumenelement (16) umfasst, **dadurch gekennzeichnet, dass** das Volumenelement (16) fluidisch ist.

2. Heißkörperheber (10) nach Anspruch 1, **dadurch** gekenntzeichnet, **dass** das Volumenelement aus Sand und/oder aus Metallpulver ausgebildet ist.

3. Heißkörperheber (10) nach Anspruch 1 oder 2, **dadurch gekennzeichnet, dass** der Dichtkörper (14) einen verformbaren hitzebeständigen Mantel (18) aufweist.

4. Heißkörperheber (10) nach Anspruch 3, **dadurch gekennzeichnet, dass** der Mantel (18) textilartig ausgebildet ist.

5. Heißkörperheber (10) nach einem der Ansprüche 1 bis 4, **dadurch gekennzeichnet, dass** der Saugheber (2) einen, vorzugsweise metallischen, Stützkörper (20) umfasst.

6. Heißkörperheber (10) nach Anspruch 5, **dadurch gekennzeichnet, dass** der Stützkörper (20) eine Heißkörperanlage (22) aufweist.

7. Heißkörperheber (10) nach einem der Ansprüche 1 bis 4 und nach Anspruch 5 oder 6. **dadurch gekennzeichnet, dass** der Stützkörper (20) saugseitig des Dichtkörpers (14) angeordnet ist.

8. Heißkörperheber (10) nach einem der Ansprüche 1 bis 4 und nach einem der Ansprüche 5 bis 7, **dadurch gekennzeichnet, dass** der Stützkörper (20) dichtkörperseitig eine Dichtkörperanlage (24) aufweist.

9. Heißkörperheber (10) nach einem der Ansprüche 1 bis 4 und nach einem der Ansprüche 5 bis 8, **dadurch gekennzeichnet, dass** der Dichtkörper (14) lösbar an dem Stützkörper (20) befestigt ist.

10. Verfahren zum Heben von Heißkörpern ist (26), wobei der Heißkörper (26) mittels eines Saughebers (12) angehoben wird, der einen verformbaren hitzebeständigen Dichtkörper (14) mit einem verformbaren Volumenelement (16) umfasst, **dadurch gekennzeichnet, dass** ein fluidisches, vorzugsweise aus Sand ausgebildetes, Volumenelement (16) verwendet wird.

11. Verfahren nach Anspruch 10, **dadurch gekennzeichnet, dass** der Saugheber (12) an einem zentralen Bereich (2R) des Heißkörpers (26) ansetzt.

12. Verfahren nach Anspruch 10 oder 11, **dadurch gekennzeichnet, dass** der Heißkörper (26) mit einer Körpertemperatur von über 500 °C, insbesondere von über 600 °C, angehoben wird.

## Claims

1. A hot-body lifter (10), comprising a suction lifter (12) with a deformable heat-resistant sealing body (14), wherein the sealing body (14) comprises a deformable volume element (16), **characterised in that** the volume element (16) is fluidic.

2. The hot-body lifter (10) according to Claim 1, **characterised in that** the volume element is constructed from sand and/or from metal powder.

3. The hot-body lifter (10) according to Claim 1 or 2, **characterised in that** the sealing body (14) has a deformable heat-resistant jacket (18).

4. The hot-body lifter (10) according to Claim 3, **characterised in that** the jacket (18) is constructed in a textile-like manner.

5. The hot-body lifter (10) according to one of Claims 1 to 4, **characterised in that** the suction lifter (2) comprises a, preferably metallic, supporting body (20).

6. The hot-body lifter (10) according to Claim 5, **characterised in that** the supporting body (20) has a hot-body system (22).

7. The hot-body lifter (10) according to one of Claims 1 to 4 and according to Claim 5 or 6, **characterised in that** the supporting body (20) is arranged on the suction-side of the sealing body (14).

8. The hot-body lifter (10) according to one of Claims 1 to 4 and according to one of Claims 5 to 7, **characterised in that** the supporting body (20) has a sealing-body system (24) on the sealing-body side.

9. The hot-body lifter (10) according to one of Claims 1 to 4 and according to one of Claims 5 to 8, **characterised in that** the sealing body (14) is releasably fastened on the supporting body (20).

10. A method for lifting hot bodies (26), wherein the hot body (26) is lifted by means of a suction lifter (12), which comprises a deformable heat-resistant sealing body (14) with a deformable volume element (16), **characterised in that** a fluidic volume element (16), which is preferably constructed from sand, is used.

11. The method according to Claim 10, **characterised in that** the suction lifter (12) is deposited on a central region (28) of the hot body (26).

12. The method according to Claim 10 or 11, **characterised in that** the hot body (26) is lifted with a body temperature of more than 500 °C, particularly of more than 600 °C.

## Revendications

1. Dispositif de levage des objets chauds (10) comprenant un dispositif de levage par aspiration (12) avec un corps d'étanchéité déformable thermorésistant (14), pour lequel le corps d'étanchéité (14) comprend un élément volumique déformable (16) **caractérisé en ce que** l'élément volumique (16) est fluide.

2. Dispositif de levage des objets chauds (10) selon la revendication 1, **caractérisé en ce que** l'élément volumique est constitué de sable et/ou de poudre métallique.

3. Dispositif de levage des objets chauds (10) selon la revendication 1 ou 2, **caractérisé en ce que** le corps d'étanchéité (14) comporte une enveloppe déformable thermorésistante (18).

4. Dispositif de levage des objets chauds (10) selon la revendication 3, **caractérisé en ce que** l'enveloppe (18) est de type textile.

5. Dispositif de levage des objets chauds (10) selon l'une quelconque des revendications 1 à 4, **caractérisé en ce que** le dispositif de levage par aspiration (2) comprend un corps de support, de préférence métallique (20).

6. Dispositif de levage des objets chauds (10) selon la revendication 5, **caractérisé en ce que** le corps de support (20) comporte un appui de corps chaud (22).

7. Dispositif de levage des objets chauds (10) selon l'une quelconque des revendications 1 à 4 et selon la revendication 5 ou 6, **caractérisé en ce que** le corps de support (20) est disposé du côté aspiration du corps d'étanchéité (14).

8. Dispositif de levage des objets chauds (10) selon l'une quelconque des revendications 1 à 4 et selon l'une quelconque des revendications 5 à 7, **caractérisé en ce que** le corps de support (20) comporte du côté du corps d'étanchéité un appui de corps d'étanchéité (24)

9. Dispositif de levage des objets chauds (10) selon l'une quelconque des revendications 1 à 4 et selon l'une quelconque des revendications 5 à 8, **caractérisé en ce que** le corps d'étanchéité (14) est fixé au corps de support (20) de manière à pouvoir être séparé.

10. Procédé de levage des objets chauds (26) pour lequel l'objet chaud (26) est soulevé au moyen d'un dispositif de levage par aspiration (12) qui comprend un corps d'étanchéité déformable thermorésistant (14) avec un élément volumique déformable (16), **caractérisé en ce qu'**un élément volumique (16) fluide est utilisé, de préférence constitué de sable.

11. Procédé de levage selon la revendication 10, **caractérisé en ce que** le dispositif de levage par aspiration (12) est appliqué à une zone centrale (28) du corps chaud (26).

12. Procédé selon la revendication 10 ou 11, **caractérisé en ce que** le corps chaud (26) est soulevé à une température de corps de plus de 500° C, en particulier de plus de 600° C.
